# FASCICULE DE BREVET EUROPEEN

(11) **EP 2 878 535 B1**
(45) Date de publication et mention de la délivrance du brevet: **08.06.2016**
(21) Numéro de dépôt: 14003840.7
(22) Date de dépôt: 14.11.2014
(51) Int. Cl.: B64C 25/52, B64C 25/32, B64C 25/58

(54) **Train d'atterrissage à patins muni d'au moins une traverse à balanciers et aéronef**
Fahrwerk mit Kufen, das mit mindestens einem Querträger mit Pendellager ausgestattet ist und entsprechendes Luftfahrzeug
Skid landing gear provided with at least one crossmember with beams and aircraft

(30) Priorité: 02.12.2013 FR 1302796
(43) Date de publication de la demande: 03.06.2015
(73) Titulaire: Airbus Helicopters, 13725 Marignane Cedex (FR)
(72) Inventeur: Prud'Homme-Lacroix, Pierre, F-13127 Vitrolles (FR); Arnaud, Rémy-Elian, F-13127 Vitrolles (FR); Makinadjian, Brice, F-13122 Ventabren (FR)
(74) Mandataire: GPI & Associés

(56) Documents cités:
- FR-A1- 2 554 210
- FR-A1- 2 895 368
- US-A- 4 270 711
- US-B1- 6 244 538

## Description

La présente invention concerne un train d'atterrissage à patins muni d'au moins une traverse à balanciers, et un aéronef comportant ce train d'atterrissage. Plus précisément, l'invention se situe dans le domaine technique des trains d'atterrissage à patins de giravion.

Classiquement, un giravion comporte un train d'atterrissage sur lequel le giravion repose au sol. Plus particulièrement, parmi les trains d'atterrissage, on distingue les trains d'atterrissage dénommés « train d'atterrissage à patins » munis d'un premier patin longitudinal d'appui et d'un deuxième patin longitudinal d'appui. Les patins sont destinés à être en contact avec le sol et disposés de part et d'autre du fuselage du giravion. Le premier patin longitudinal d'appui et le deuxième patin longitudinal définissent conjointement un plan dénommé « plan d'appui » par commodité.

L'aéronef repose alors sur le sol via deux patins allongés.

Pour relier chaque patin au fuselage de l'aéronef, le train d'atterrissage à patins peut être muni d'une première traverse transversale et d'une deuxième traverse transversale reliant chacune le premier patin au deuxième patin.

La première traverse est dite « traverse avant » puisque cette première traverse relie au fuselage les zones situées à l'avant du premier patin longitudinal et du deuxième patin longitudinal. A l'inverse, la deuxième traverse est dite «traverse arrière » dans la mesure où cette deuxième traverse relie au fuselage les zones situées à l'arrière du premier patin longitudinal et du deuxième patin longitudinal.

Le train d'atterrissage est alors fixé à l'aéronef par ses traverses avant et arrière.

Ces trains d'atterrissage permettent aux giravions de se poser sur de multiples types de surfaces.

Par ailleurs, un train d'atterrissage de giravion peut être principalement soumis à deux types de sollicitations lors de l'atterrissage, à savoir une sollicitation verticale liée à des moments et des efforts verticaux dirigés selon une direction verticale et une sollicitation en roulis liée à des moments et des efforts de roulis résultant d'un mouvement de roulis du giravion.

Ces sollicitations en roulis et en tangage peuvent être à l'origine du phénomène de résonance sol sur un giravion comportant un rotor de sustentation portant au moins trois pales articulées.

En effet, les oscillations de chaque pale autour de son axe de traînée peuvent se coupler de façon instable avec les mouvements du fuselage du giravion suivant les modes de déformations élastiques notamment en roulis du train d'atterrissage : c'est l'origine du phénomène dénommé « résonance au sol »

Lors de leur rotation, les pales sont écartées de leur position d'équilibre dans le plan de rotation du rotor, et peuvent se répartir angulairement inégalement par rapport à l'axe de rotation du rotor. Cette répartition inégale est à l'origine d'un balourd par déplacement du centre de gravité du rotor hors de l'axe de rotation de ce rotor. De plus, les pales écartées de leur position d'équilibre oscillent autour de cette position d'équilibre à une fréquence d'oscillation *ω_{δ}* qui est la fréquence propre des pales en traînée.

Si Ω est la fréquence de rotation du rotor, le fuselage du giravion est ainsi excité aux fréquences |Ω±*ω_{δ}*|.

Posé au sol sur un train d'atterrissage, le fuselage du giravion constitue schématiquement un système à masse soutenue au dessus du sol par un ressort et un amortisseur au niveau de branches descendante des traverses. Le fuselage reposant sur le train d'atterrissage est donc caractérisé par des modes propres de vibration en roulis et en tangage. Il y a risque d'instabilité au sol lorsque la fréquence propre du fuselage sur son train d'atterrissage en roulis ou en tangage est voisine de la fréquence propre d'oscillation |Ω+*ω_{δ}*| ou |Ω-*ω_{δ}*| ce qui correspond au phénomène dénommé résonance sol. En pratique, on constate en général que l'instabilité en roulis peut se produire si la fréquence propre du fuselage sur son train d'atterrissage est voisine de |Ω-*ω_{δ}*|.

Pour éviter l'instabilité, il est notamment connu de rechercher à éviter le croisement de ces fréquences en adaptant la raideur en roulis et/ ou en tangage du train d'atterrissage.

Toutefois, l'adaptation des trains d'atterrissage peut être complexe. Un compromis doit notamment être trouvé entre d'une part la raideur verticale du train d'atterrissage qui gère le confort et le niveau de charge introduit dans la structure lors d'un atterrissage, et d'autre part les raideurs en tangage et en roulis qui sont très influentes sur le comportement en résonance sol.

On rappelle que l'homme du métier appelle « raideur verticale » la raideur du train d'atterrissage sous l'effet de la pesanteur (ou tout autre sollicitation verticale) selon l'axe en élévation de l'aéronef, à l'assiette statique près.

La mise au point d'un train d'atterrissage à patins est ainsi généralement longue et délicate. Cette mise au point est donc rarement remise en cause au cours de la vie de l'aéronef.

Cependant, des modifications substantielles d'un aéronef peuvent survenir au cours de sa vie, et induire par exemple une augmentation de la masse de l'aéronef. Les fréquences propres du fuselage en roulis et/ ou en tangage peuvent alors évoluer, en risquant de générer l'apparition du phénomène de résonance sol.

Dans ce cas, un constructeur peut tenter de modifier les raideurs du train d'atterrissage en roulis et/ ou en tangage, sans trop influencer le comportement de l'aéronef à l'atterrissage notamment.

A cet effet, des modifications géométriques peuvent être apportées à un train d'atterrissage à patins. Toutefois, ces modifications géométriques peuvent présenter l'inconvénient de modifier la raideur verticale du train d'atterrissage. Le comportement du train à l'atterrissage peut alors notamment être impacté.

On connait aussi une solution à base de mécanismes.

Ainsi, un train d'atterrissage peut comporter des traverses fixées à un fuselage. De plus, le train d'atterrissage présente au moins un raidisseur comprenant au moins une bielle et au moins un moyen de limitation de la déformation en roulis de la portion centrale d'une traverse, chaque moyen de limitation étant solidarisé à la portion centrale de la traverse, au moins une articulation principale articulant chaque bielle au moyen de limitation et une articulation secondaire articulant chaque bielle à un point extérieur à la portion centrale afin de limiter la déformation de la portion centrale suite à un mouvement de roulis d'un aéronef.

Ce train d'atterrissage suggère donc de fixer une traverse directement à un fuselage, et d'utiliser un mécanisme pour optimiser sa déformation en roulis.

Le document FR 2 554 210 présente une poutre flexible en matériaux composites ayant sensiblement la forme d'un caisson allongé de structure stratifiée. Deux semelles rigides sont reliées par deux voiles.

Un plot déformable d'absorption d'énergie est disposé entre les deux semelles, et comporte au moins un bloc d'un matériau élastomère à forte rémanence de déformation.

La poutre comprend de plus au moins un amortisseur viscoélastique monté sur la face externe de la semelle. Cet amortisseur est sollicité en traction par des bielles lors de la déformation en flexion de la poutre pour produire un amortissement s'ajoutant à l'amortissement assuré par chaque plot d'absorption d'énergie.

Ce montage suggère l'utilisation d'un élastomère au sein d'une traverse et au sein d'un amortisseur fixé sous la traverse. Ce montage est éloigné de l'invention en ayant une influence restreinte sur le positionnement des fréquences propres du fuselage en roulis ou en tangage par rapport aux fréquences propres d'oscillation |Ω+*ω_{δ}*| ou |Ω-*ω_{δ}*|

Le document US 4 270 711 présente un train d'atterrissage muni d'une poutre reliée par un pivot à une traverse du train d'atterrissage de manière à pouvoir effectuer une rotation autour d'un axe. Les extrémités de la poutre sont alors fixées à la structure d'un aéronef.

Cet enseignement permet notamment de fixer un train d'atterrissage muni de trois points de fixation à une structure comportant quatre points de fixation.

Cet enseignement nécessite alors de prévoir quatre points de fixation au fuselage.

Le document US 6 244 538 présente un train d'atterrissage.

Ce document permet de positionner les fréquences propres du fuselage en roulis ou en tangage par rapport aux fréquences propres d'oscillation |Ω+*ω_{δ}*| ou |Ω-*ω_{δ}*| en fonction du point de foisonnement de bielles supports.

Le document US 3, 173,632 présente un train d'atterrissage muni de deux patins reliés par deux tiges de torsion. Chaque tige de torsion est solidaire de deux bras, chaque bras étant articulé à un montant s'élevant en élévation à partir d'un patin.

De plus, un moyen d'immobilisation peut autoriser ou empêcher une rotation de chaque tige de torsion autour de son axe de symétrie.

On connait aussi le document US 4, 519, 559 et le document FR 2 895 368.

La présente invention a alors pour objet de proposer un train d'atterrissage muni d'un raidisseur, ainsi qu'un aéronef comportant un tel train d'atterrissage.

Ce train d'atterrissage d'aéronef est muni d'un premier patin longitudinal d'appui et d'un deuxième patin longitudinal d'appui ainsi que d'une traverse transversale dite « traverse avant » et d'une traverse transversale dite «traverse arrière » reliant chacune le premier patin au deuxième patin. Chaque traverse comprend une première branche descendante solidarisée au premier patin ainsi qu'une deuxième branche descendante solidarisée au deuxième patin.

La traverse peut être une traverse continue munie d'une portion centrale s'étendant d'une première zone latérale solidaire de la première branche descendante vers une deuxième zone latérale solidaire de la deuxième branche descendante en passant par une zone centrale.

La traverse peut aussi être une traverse discontinue dépourvue de portion centrale, un espace séparant la première branche de la deuxième branche.

Dès lors, ce train d'atterrissage comporte au moins un raidisseur agencé sur une traverse, ce raidisseur comprenant successivement selon une direction transversale :
- un premier balancier s'étendant d'une première portion d'extrémité externe solidarisée à la traverse vers une première portion d'extrémité interne libre qui n'est pas solidarisée à la traverse,
- un deuxième balancier s'étendant d'une deuxième portion d'extrémité interne libre qui n'est pas solidarisée à la traverse vers une deuxième portion d'extrémité externe solidarisée à la traverse

Ce raidisseur comporte en outre :
- un premier moyen d'articulation pour articuler le premier balancier à une structure porteuse d'un aéronef, et un deuxième moyen d'articulation pour articuler le deuxième balancier à ladite structure porteuse,
- un organe de liaison allongé s'étendant d'une première extrémité de liaison articulée à ladite première portion d'extrémité interne du premier balancier vers une deuxième extrémité de liaison articulée à ladite deuxième portion d'extrémité interne du deuxième balancier.

Le raidisseur s'étend alors transversalement selon une direction allant du premier patin vers le deuxième patin. Plus précisément, le raidisseur s'étend de la première portion d'extrémité externe du premier balancier vers la deuxième portion d'extrémité externe du deuxième balancier, en passant successivement par la première portion d'extrémité interne, l'organe de liaison allongé et la deuxième portion d'extrémité interne.

Chaque balancier d'un raidisseur est rendu solidaire de la traverse par sa portion d'extrémité externe uniquement. De plus, les moyens d'articulation confèrent à chaque balancier un degré de liberté en rotation autour d'une direction d'articulation, par rapport à une structure porteuse d'un aéronef muni du train d'atterrissage.

Une traverse équipée d'un raidisseur n'est alors pas fixée directement à une structure porteuse d'un aéronef, mais est supportée par deux balanciers. Ces deux balanciers sont d'une part articulés à la structure porteuse et d'autre part articulés à un même organe de liaison allongé. Les balanciers s'appuient alors l'un sur l'autre par le biais de l'organe de liaison allongé.

En vol, l'organe de liaison allongé peut sensiblement être contenu dans le plan antéropostérieur longitudinal de symétrie de l'aéronef et du train d'atterrissage. L'organe de liaison allongé d'un raidisseur s'étend donc en vol selon une direction en élévation contenue dans ce plan antéropostérieur.

De manière surprenante, un tel raidisseur permet de régler la raideur en roulis d'un train d'atterrissage, en ayant éventuellement un impact limité voire nul sur la raideur verticale de ce train d'atterrissage. Ce raidisseur permet notamment de créer deux cheminements différents pour les efforts résultant d'une sollicitation verticale du train d'atterrissage et les efforts résultant d'une sollicitation en roulis de ce train d'atterrissage.

En effet, la traverse tend à se déformer différemment en fonction de la manière dont elle est sollicitée.

Cette traverse est sollicitée selon un premier mode de flexion verticale lors d'un atterrissage, et selon un deuxième mode de flexion en roulis sous une sollicitation en roulis obtenue au sol par exemple.

Par exemple, lorsque la traverse est une traverse continue munie d'une portion centrale, cette portion centrale présente une forme de U aplati durant le premier mode de flexion verticale. La déformée de la portion centrale présente donc un creux.

Les balanciers effectuent quant à eux des rotations identiques en module mais de signes opposés et ne transmettent alors pas d'effort à l'organe de liaison allongé. Cet organe de liaison allongé s'incline légèrement par rapport à la verticale. L'impact du raidisseur sur la raideur verticale du train d'atterrissage est ainsi limité, la tenue du moment de flexion étant assuré par la portion centrale de la traverse dans cette zone.

Par contre, la portion centrale d'une traverse continue tend à présenter une forme de S durant le deuxième mode de flexion en roulis. La déformée de la portion centrale présente donc deux creux de signes opposés se rejoignant en un noeud.

Les balanciers tendent alors à effectuer des rotations dans des sens contraires. Il en résulte que l'organe de liaison allongé est sollicité en traction ou compression. Cet organe de liaison allongé tend alors à limiter le mouvement rotatif des balanciers et par suite la déformation de la traverse.

Les efforts résultant d'une sollicitation verticale du train tendent alors à être supportés par la traverse en tant que telle. A l'inverse, les efforts résultant d'une sollicitation en roulis du train tendent à être supportés par le raidisseur.

L'invention présente par conséquent un raidisseur prenant en considération la déformée d'une traverse, et plus particulièrement la déformée de sa portion centrale liée à la structure d'un aéronef, pour agir principalement sur la raideur en roulis du train d'atterrissage.

Par suite, le raidisseur peut conférer des capacités de réglage de la raideur du train d'atterrissage visant à réduire les risques d'apparition du phénomène de résonance sol.

L'invention s'applique aussi à une traverse discontinue.

De plus, on comprend que l'invention peut être obtenue en adaptant un tel raidisseur sur un train d'atterrissage existant, par exemple pour adapter le train d'atterrissage à une nouvelle configuration d'un giravion. Suite par exemple à une augmentation de la masse d'un giravion ou à une modification d'un rotor de sustentation d'un giravion, un raidisseur selon l'invention peut éventuellement être implémenté sur ce giravion.

Par exemple, les balanciers peuvent être positionnées afin que le premier moyen d'articulation et le deuxième moyen d'articulation d'un raidisseur soit fixés à deux points de fixation existants d'un aéronef.

Le train d'atterrissage peut de plus comporter une ou plusieurs des caractéristiques qui suivent.

Ainsi chaque balancier peut être décalé longitudinalement par rapport à la traverse. Un balancier n'est donc pas agencé au dessus ou au dessous de la traverse mais accolé longitudinalement à cette traverse. Le terme « longitudinalement » fait référence au plan antéropostérieur selon lequel un aéronef s'étend longitudinalement.

Par ailleurs, chaque traverse d'un train d'atterrissage peut être équipée d'au moins un raidisseur.

Ainsi, une ou deux traverses peuvent être équipées d'au moins un raidisseur en fonction des phénomènes rencontrés sur un aéronef donné.

De plus, au moins une traverse peut être équipée de deux raidisseurs disposés longitudinalement de part et d'autre de cette traverse.

Pour maximiser l'efficacité, un raidisseur est disposé longitudinalement devant une traverse, et un autre raidisseur est disposé longitudinalement derrière la traverse.

Suivant les besoins, un train d'atterrissage à deux traverses peut donc posséder entre un et quatre raidisseurs.

Par ailleurs, au moins une extrémité de liaison de l'organe de liaison allongé est éventuellement articulée à un balancier par une rotule.

Les balanciers d'un raidisseur sont donc reliés l'un à l'autre par un élément de liaison de type organe de liaison allongé. Cet organe de liaison allongé est lié par au moins une rotule à au moins un balancier pour ne transférer que des efforts de type traction/compression dans l'organe de liaison allongé. Deux rotules peuvent relier l'organe de liaison allongé au premier balancier et au deuxième balancier d'un raidisseur.

Cependant, au moins une extrémité de liaison de l'organe de liaison allongé d'un raidisseur est éventuellement articulée à un balancier par un pivot.

Par ailleurs, l'organe de liaison allongé peut comprendre une bielle de liaison, et/ ou encore un amortisseur. L'amortisseur d'un organe de liaison allongé peut être par exemple et de manière non limitative un amortisseur hydraulique, un amortisseur fonctionnant par frottement, un amortisseur comportant un élastomère.

En outre, au moins un balancier peut présenter une raideur en roulis supérieure à la raideur en roulis de la traverse à laquelle ce balancier est solidarisé.

Chaque balancier peut être dimensionné pour être le plus raide possible afin d'optimiser le fonctionnement de l'invention pour tendre à ne pas se déformer sous une sollicitation en roulis.

Par exemple, au moins un balancier présente une raideur en roulis supérieure à la raideur en roulis d'un tronçon de la traverse à laquelle ce balancier est solidarisé. Ce tronçon peut être une zone latérale de la portion centrale reliée à une branche descendante, et / ou peut inclure une partie d'une branche descendante.

Pour rendre le raidisseur encore plus efficace, un constructeur peut assouplir la traverse au niveau des tronçons reliés à un balancier. Un tel assouplissement est éventuellement obtenu en modifiant l'épaisseur de la traverse dans les tronçons adéquats.

Par ailleurs, au moins un balancier est solidarisé à un tronçon d'une traverse selon une direction de fixation externe et une direction de fixation interne qui sont décalées transversalement l'une de l'autre.

Un balancier peut aussi être soudé à la traverse, ou encore être fixé à cette traverse par au moins un point de fixation.

La solution mettant en oeuvre une soudure peut être intéressante car elle permet de passer d'au moins deux points de fixation ponctuels à un point de fixation continu. La soudure peut être une soudure simple, ou encore une soudure réalisée par friction malaxage connue sous l'expression « stir welding » en langue anglaise.

Chaque balancier est par ailleurs par exemple relié à la traverse en deux points de fixation, ce qui représente une solution efficace pour capter les mouvements de roulis.

Une fixation en deux points de fixation dirigés respectivement selon une direction de fixation externe et une direction de fixation interne présente l'avantage de laisser une liberté de réglage de la raideur du train d'atterrissage au constructeur.

Ainsi, chaque balancier peut être fixé à la traverse par des moyens de fixation passant par un point de fixation dit extérieur et un point de fixation dit intérieur. Les deux points de fixation extérieurs des deux balanciers d'un raidisseur sont alors positionnés transversalement de part et d'autre des points de fixation intérieurs.

La position des points de fixation extérieurs permet principalement de régler l'écartement des points de fixation extérieurs et par suite la raideur en roulis du train d'atterrissage. La position des points de fixation intérieurs permet principalement de régler l'écartement des points de fixation intérieurs et par suite la raideur verticale du train d'atterrissage sous une sollicitation verticale.

En effet, la distance extérieure séparant les points de fixation extérieurs a donc une influence sur la raideur en roulis. De plus, la distance intérieure séparant les points de fixation intérieurs a une influence sur la raideur verticale.

Dès lors, une tige de fixation ou équivalent peut lier un point de fixation extérieur du balancier à la traverse, en étant dirigée selon une direction dite « direction de fixation externe ». De même, une tige de fixation ou équivalent peut lier un point de fixation intérieur du balancier à la traverse, en étant dirigée selon une direction dite « direction de fixation interne ».

Chaque direction de fixation est éventuellement horizontale et passe par une fibre neutre de la traverse.

Le terme fibre neutre est bien connu de l'homme du métier. Toutefois et pour mémoire, une fibre neutre peut représenter un plan de la traverse, la matière de la traverse située dans ce plan se déformant par rotation locale sans subir de contrainte de compression ou de traction suite à une flexion de la traverse.

Par suite, des tiges de fixation dirigées selon les directions de fixation peuvent traverser la fibre neutre d'une traverse, pour minimiser les sollicitations exercées sur cette traverse.

Par ailleurs, chaque moyen d'articulation d'un balancier à une structure porteuse présente une direction d'articulation autour de laquelle le balancier peut effectuer une rotation. Cette direction d'articulation peut être disposée transversalement entre la direction de fixation externe et la direction de fixation interne de ce balancier.

En outre, au moins un balancier peut comporter une plaque décalée longitudinalement par rapport au tronçon de la traverse à laquelle ce balancier est solidarisé.

Selon une autre variante, au moins un balancier peut comporter un tube, au moins un palier étant interposé entre le balancier et un tronçon de la traverse à laquelle ce balancier est solidarisé.

Selon un premier mode de réalisation, la traverse est une traverse continue comprenant une portion centrale s'étendant entre la première branche et la deuxième branche. Le raidisseur s'étend parallèlement à ladite traverse en comprenant successivement selon une direction transversale :
- le premier balancier qui est décalé longitudinalement par rapport à la traverse,
- I deuxième balancier qui est décalé longitudinalement par rapport à la traverse en étant dans l'alignement du premier balancier.

Le premier mode de réalisation vise donc un raidisseur agencé en parallèle d'une traverse continue pour suspendre la traverse à un aéronef.

Selon un deuxième mode de réalisation, la traverse est une traverse discontinue comprenant un espace vide entre la première branche et la deuxième branche. Le raidisseur s'étendant dans ledit espace :
- ledit premier balancier est solidarisé par ladite première portion d'extrémité externe à la première branche en se situant dans l'alignement de cette première branche, ladite première portion d'extrémité externe étant creuse,
- ledit deuxième balancier est solidarisé par ladite deuxième portion d'extrémité externe à la deuxième branche en se situant dans l'alignement de cette deuxième branche, ladite deuxième portion d'extrémité externe étant creuse,
- ledit raidisseur comporte un tube interne pénétrant dans la première portion d'extrémité externe et la deuxième portion d'extrémité externe, ce tube interne étant fixé à la première portion d'extrémité externe et à la deuxième portion d'extrémité externe, ladite première portion d'extrémité interne et ladite deuxième portion d'extrémité interne étant longitudinalement décalées par rapport audit tube interne pour être reliées à l'organe de liaison allongé.

Ce deuxième mode de réalisation propose d'agencer chaque balancier dans le prolongement d'une branche descendante. Eventuellement, une branche descendante et le balancier correspondant forment une seule et unique pièce mécanique.

De plus, le tube interne peut être assimilé à la portion centrale d'une traverse continue selon le premier mode de réalisation. Dès lors, ce deuxième mode de réalisation fonctionne de manière similaire au premier mode de réalisation.

Outre un train d'atterrissage, l'invention vise un aéronef comportant ce train d'atterrissage. Plus particulièrement, l'aéronef peut être un aéronef comprenant au moins une voilure tournante.

L'invention et ses avantages apparaîtront avec plus de détails dans le cadre de la description qui suit avec des exemples donnés à titre illustratif en référence aux figures annexées qui représentent :
- la figure 1, un schéma présentant un aéronef selon l'invention,
- la figure 2, une vue de face présentant un raidisseur selon un premier mode de réalisation de l'invention,
- la figure 3, un vue tridimensionnelle présentant un raidisseur selon un premier mode de réalisation de l'invention,
- la figure 4, un schéma explicitant la déformée d'une traverse continue en l'absence de l'invention sous une sollicitation verticale,
- la figure 5, un schéma explicitant le fonctionnement d'un raidisseur selon un premier mode de réalisation sous une sollicitation verticale,
- la figure 6, un schéma explicitant la déformée d'une traverse en présence de l'invention selon un premier mode de réalisation sous une sollicitation verticale,
- la figure 7, un schéma explicitant la déformée d'une traverse continue en l'absence de l'invention sous une sollicitation en roulis,
- la figure 8, un schéma explicitant le fonctionnement d'un raidisseur selon un premier mode de réalisation sous une sollicitation en roulis,
- la figure 9, un schéma explicitant la déformée d'une traverse en présence de l'invention selon un premier mode de réalisation sous une sollicitation en roulis,
- la figure 10, un schéma présentant un train d'atterrissage muni de deux raidisseurs selon un premier mode de réalisation par traverse,
- la figure 11, un schéma présentant un organe de liaison allongé de type amortisseur, et
- la figure 12, un schéma présentant un deuxième mode de réalisation.

Les éléments présents dans plusieurs figures distinctes sont affectés d'une seule et même référence.

On note que trois directions X, Y et Z orthogonales les unes par rapport aux autres sont représentées sur certaines figures.

La première direction X est dite longitudinale. Le terme « longitudinal » est relatif à toute direction parallèle à la première direction X.

La deuxième direction Y est dite transversale. Le terme « transversal » est relatif à toute direction parallèle à la deuxième direction Y.

Enfin, la troisième direction Z est dite en élévation. L'expression « en élévation » ou « vertical » est relative à toute direction parallèle à la troisième direction Z.

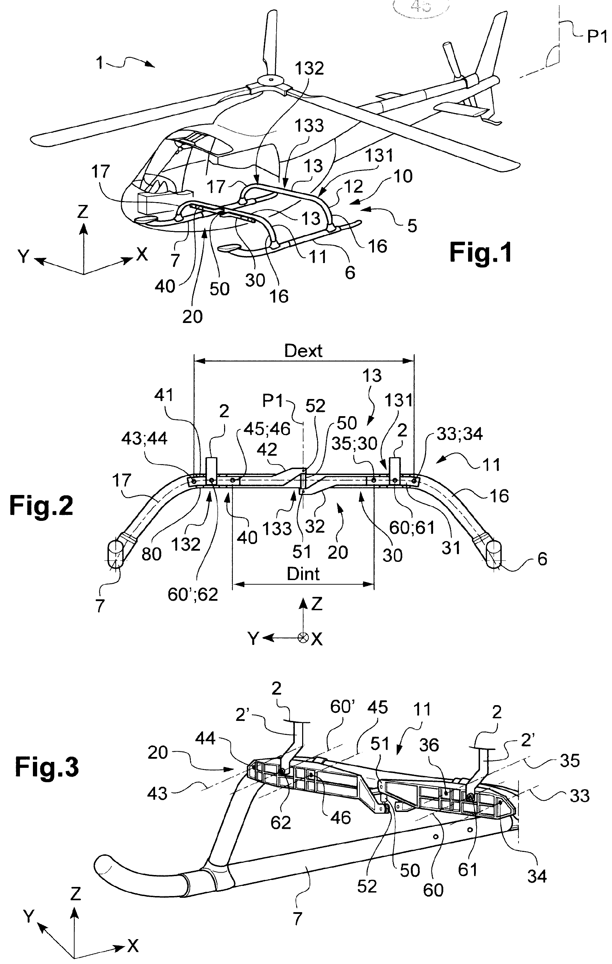

La figure 1 présente un aéronef 1, et plus particulièrement un giravion.

Cet aéronef 1 est muni d'un fuselage qui s'étend longitudinalement le long d'un plan antéropostérieur P1 de symétrie. De plus, le fuselage est solidaire d'un train d'atterrissage 5 à patins.

On note qu'une partie du fuselage a été rendue transparente pour permettre la visualisation du train d'atterrissage 5.

Ce train d'atterrissage 5 comporte un premier patin 6 longitudinal d'appui et d'un deuxième patin 7 longitudinal d'appui.

Dès lors, le train d'atterrissage comprend deux traverses 10 transversales reliant le premier patin 6 et le deuxième patin 7, à savoir une traverse avant 11 transversale et une traverse arrière 12 transversale.

Chaque traverse 10 est pourvue d'une première branche 16 qui est solidarisée au premier patin 6, et d'une deuxième branche 17 solidarisée au deuxième patin 7.

De plus, selon la première réalisation de la figure 1, chaque traverse est continue en comportant une portion centrale 13 solidarisée à la première branche 16 et à la deuxième branche descendante 17. Les branches sont parfois dénommées « branches descendantes » dans la mesure où elles s'étendent de la portion centrale vers un patin en se rapprochant du sol. Ainsi, chaque portion centrale 13 est sensiblement contenue dans un plan horizontal, les branches descendantes 16, 17 s'étendant de ce plan horizontal vers les patins 6, 7. Chaque portion centrale peut correspondre à un tube rectiligne ou possédant une faible courbure.

Chaque portion centrale peut être décomposée en un premier tronçon latéral 131 relié à la première branche descendante, un deuxième tronçon latéral 132 relié à la deuxième branche descendante, et un tronçon central 133 interposé entre le premier tronçon latéral 131 et le deuxième tronçon latéral 132 en étant traversé par le plan antéropostérieur P1.

Selon un deuxième mode de réalisation décrit par la suite, la traverse est une traverse discontinue.

Indépendamment de la réalisation, le train d'atterrissage 5 est alors relié à une structure porteuse de l'aéronef.

Selon l'invention, ce train d'atterrissage 5 est muni d'au moins un raidisseur 20 coopérant avec une traverse 10. Un raidisseur 20 est simplement représenté de manière schématique contre la traverse avant sur la figure 1 pour ne pas alourdir la représentation.

Un raidisseur comporte alors un premier balancier 30 et un deuxième balancier 40 qui sont chacun partiellement reliés à une traverse par leurs portions d'extrémité externe. Le premier balancier 30 et le deuxième balancier 40 sont de plus reliés entre eux à proximité du plan antéropostérieur P1 par un organe de liaison allongé 50.

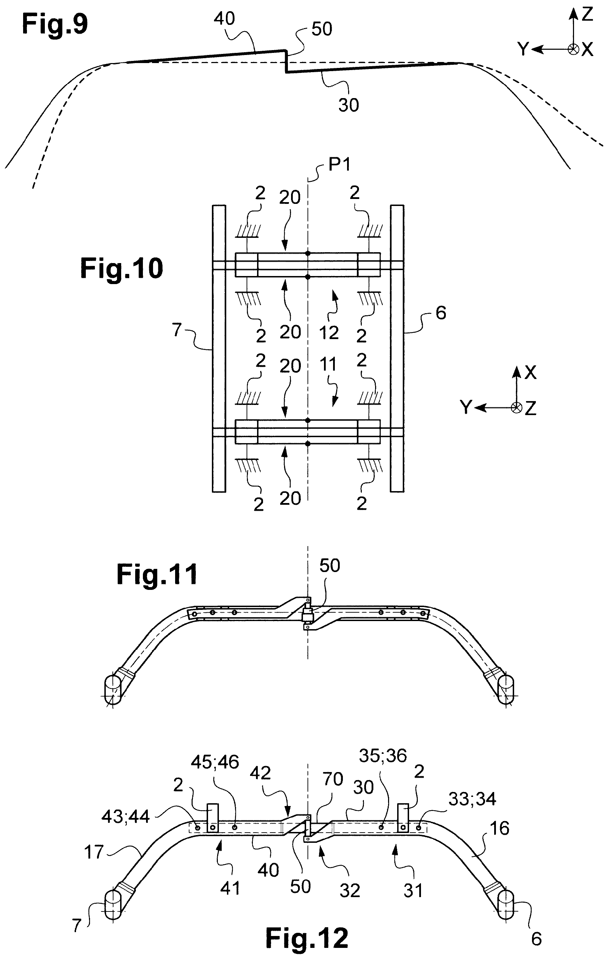

Selon la variante de la figure 1, l'organe de liaison allongé 50 est une bielle de liaison. Selon la variante de la figure 11, l'organe de liaison allongé est un amortisseur. Ces deux réalisations sont compatibles entre elles.

Selon le premier mode de réalisation, chaque balancier 30, 40 d'un raidisseur est décalé longitudinalement par rapport à la traverse, et donc selon la direction longitudinale X.

En référence à la figure 10, chaque traverse peut être équipée d'au moins un raidisseur 20. Eventuellement, au moins une traverse est équipée de deux raidisseurs 20 disposés longitudinalement de part et d'autre de cette traverse.

La figure 2 présente un raidisseur 20 selon le premier mode de réalisation vue de face.

Ce raidisseur comporte donc un premier balancier s'étendant transversalement d'une première portion d'extrémité externe 31 vers une deuxième portion d'extrémité interne 32, selon un sens allant du premier patin 6 vers le plan antéropostérieur P1.

La première portion d'extrémité externe 31 est solidarisée à la traverse, et notamment à un premier tronçon latéral 131 de la portion centrale 13. Des moyens de fixations 34, 36 usuels peuvent être utilisés pour fixer la première portion d'extrémité externe 31 à la traverse, tels que des tiges de fixation de type boulons par exemple.

Le premier balancier 30 peut être solidarisé à un premier tronçon latéral 131 d'une traverse par un point de fixation réalisé par exemple par une soudure, ou encore par au moins deux points de fixation.

Dès lors, le premier balancier peut être fixé à ce premier tronçon latéral 131 selon une première direction de fixation externe 33 et une première direction de fixation interne 35 qui sont décalées transversalement l'une de l'autre. Chaque première direction de fixation 33, 35 est horizontale pour traverser la traverse au niveau d'une fibre neutre. Ainsi, deux moyens de fixation 34, 36 s'étendent selon la première direction de fixation externe 33 et la première direction de fixation interne 35 pour pénétrer dans la traverse au niveau de sa fibre neutre.

A l'inverse, la première portion d'extrémité interne 32 est libre, en n'étant pas solidarisée directement à la traverse. Cette première portion d'extrémité interne 32 est alors en vis-à-vis d'un tronçon central 133 de la portion centrale 13 de la traverse.

On nomme donc par « portion d'extrémité externe » un segment d'un balancier fixé à une traverse, et par « portion d'extrémité interne » le segment de ce balancier qui n'est pas fixé à la traverse.

De plus, le raidisseur comporte un premier moyen d'articulation 61 pour articuler le premier balancier à une structure porteuse 2. Le premier moyen d'articulation 61 définit une première direction d'articulation 60 autour de laquelle le premier balancier 30 peut effectuer une rotation. A cet effet, le premier moyen d'articulation peut comprendre un axe de pivotement dirigé selon la direction d'articulation 60. Cette première direction d'articulation 60 s'étend longitudinalement, et est disposée transversalement entre la première direction de fixation externe 33 et la première direction de fixation interne 35 du premier balancier 30 représenté.

De plus, le raidisseur comporte donc un deuxième balancier 40. Le deuxième balancier 40 s'étend transversalement d'une deuxième portion d'extrémité externe 41 vers une deuxième portion d'extrémité interne 42, selon un sens allant du deuxième patin 7 vers le plan antéropostérieur P1.

La deuxième portion d'extrémité externe 41 est solidarisée à la traverse, et notamment à un deuxième tronçon latéral 132 de la portion centrale. Des moyens de fixations 44, 46 usuels peuvent être utilisés pour fixer la deuxième portion d'extrémité externe 41 à la traverse, tels que des tiges de fixation de type boulons par exemple.

Le deuxième balancier 40 peut être solidarisé à un tronçon d'une traverse par au moins un point de fixation, et notamment deux points de fixation.

Dès lors, le deuxième balancier peut être fixé à ce tronçon selon une deuxième direction de fixation externe 43 et une deuxième direction de fixation interne 45 qui sont décalées transversalement l'une de l'autre. Ces deuxièmes directions de fixation 43, 45 sont horizontales pour traverser la traverse au niveau d'une fibre neutre. Ainsi, deux moyens de fixation 44, 46 s'étendent selon la deuxième direction de fixation externe 43 et la deuxième direction de fixation interne 45 pour pénétrer dans la traverse au niveau de sa fibre neutre.

A l'inverse, la deuxième portion d'extrémité interne 42 est libre, en n'étant pas solidarisée à la traverse. Cette deuxième portion d'extrémité interne 42 est alors vis-à-vis d'un tronçon central 133 de la portion centrale 13 de la traverse.

De plus, le raidisseur comporte un deuxième moyen d'articulation 62 pour articuler le deuxième balancier à la structure porteuse 2. Le deuxième moyen d'articulation 62 définit une deuxième direction d'articulation 60' autour de laquelle le deuxième balancier 40 peut effectuer une rotation. A cet effet, le deuxième moyen d'articulation peut comprendre un axe de pivotement dirigé selon la deuxième direction d'articulation 60'. Cette deuxième direction d'articulation 60' s'étend longitudinalement, et est disposée transversalement entre la deuxième direction de fixation externe 43 et la deuxième direction de fixation interne 45 du deuxième balancier 40 représenté.

Par ailleurs, le raidisseur comprend un organe de liaison allongé 50.

L'organe de liaison allongé 50 s'étend en élévation d'une première extrémité de liaison 51 articulée à la première portion d'extrémité interne 32 du premier balancier 30, vers une deuxième extrémité de liaison 52 articulée à la deuxième portion d'extrémité interne 42 du deuxième balancier 40.

Plus précisément, l'organe de liaison allongé 50 est sensiblement contenu en vol dans le plan antéropostérieur P1 longitudinal de symétrie du train d'atterrissage.

Dès lors, chaque extrémité de liaison 51, 52 de l'organe de liaison allongé 50 peut être articulée à un balancier 30 par une rotule ou par un pivot.

Selon une direction transversale Y et en se dirigeant du premier patin 6 vers le deuxième patin 7, le raidisseur 20 comprend donc la portion d'extrémité externe 31, la première portion d'extrémité interne 32, l'organe de liaison allongé, la deuxième portion d'extrémité interne 42 puis la deuxième portion d'extrémité externe 41.

Selon la variante du premier mode de réalisation schématisé sur la figure 2, un balancier 30, 40 peut comprendre un tube s'étendant transversalement. Au moins un palier 80 est par exemple interposé entre le balancier 30, 40 et le tronçon de la traverse à laquelle ce balancier est solidarisé.

Selon la variante du premier mode de réalisation schématisé sur la figure 3, un balancier 30, 40 comporte une plaque décalée longitudinalement par rapport à la traverse.

Par ailleurs et indépendamment de la variante, chaque balancier peut être dimensionné pour présenter une raideur en roulis optimisée.

Notamment, la raideur en roulis d'un balancier peut être supérieure à la raideur en roulis de la traverse reliée à ce balancier, voire plus spécifiquement à la raideur en roulis du tronçon de la traverse attaché à ce balancier.

De même, les points de fixation de chaque balancier à une traverse sont positionnés géométriquement en fonction des résultats attendus.

En référence à la figure 2, le réglage de la distance Dext représentant l'écartement des points de fixation extérieurs a notamment un impact sur la raideur en roulis du train d'atterrissage, alors que la distance Dint représentant l'écartement des points de fixation intérieurs a notamment un impact sur la raideur du train d'atterrissage sous une sollicitation verticale.

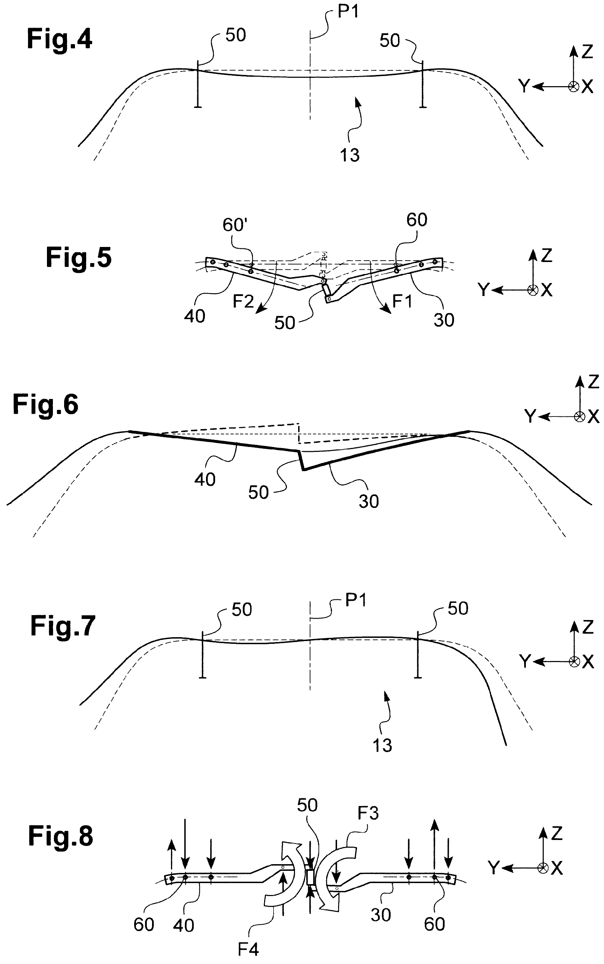

Les figures 4 à 9 illustrent le fonctionnement de l'invention selon le premier mode de réalisation.

La figure 4 présente une représentation d'une traverse en vol en traits en pointillés et une représentation de la déformée d'une traverse en trait plein en l'absence de l'invention et sous l'effet d'une sollicitation verticale.

Lors d'un atterrissage, la traverse est sollicitée selon un premier mode de flexion verticale. La portion centrale tend alors à avoir une forme de U aplati.

En référence à la figure 5, le premier balancier 30 et le deuxième balancier 40 effectuent des rotations selon des sens symétriques représentés par les flèches F1 et F2.

Ces mouvements rotatifs des balanciers sont en effet autorisés par le déplacement concomitant de l'organe de liaison allongé 50.

En référence à la figure 6, le raidisseur a alors une influence limitée sur la déformée de la traverse sous une sollicitation verticale. Lors d'un atterrissage à plat, il n'y a en effet aucun effort dans l'organe de liaison allongé 50.

Par contre, la figure 7 présente une représentation d'une traverse en vol en traits en pointillés, et en trait plein une représentation de la déformée d'une traverse sollicitée au sol et rotor tournant selon un deuxième mode de flexion en roulis.

Selon ce mode de déformation, la portion centrale tend alors à avoir une forme de S en présentant deux lobes de part et d'autre du plan de symétrie P1.

En référence à la figure 8, le premier balancier 30 et le deuxième balancier 40 tendent à effectuer des rotations selon des sens identiques représentés pas les flèches F3 et F4. Ces mouvements rotatifs des balanciers sont cependant bloqués par la présence de l'organe de liaison allongé 50. En effet, l'organe de liaison allongé est alors sollicité en traction ou en compression pour empêcher les balanciers d'effectuer leurs mouvements de rotation antagonistes.

En référence à la figure 9, le raidisseur a alors une influence importante sur la déformée de la traverse sous l'effet d'une sollicitation en roulis, le raidisseur tendant à empêcher ou du moins à limiter la déformation de cette traverse dans ces conditions.

La figure 11 présente un deuxième mode de réalisation.

Selon le premier mode de réalisation, la traverse est une traverse continue. Le premier balancier 30 est donc décalé longitudinalement par rapport à la traverse, le deuxième balancier 40 étant décalé longitudinalement par rapport à la traverse en étant dans l'alignement du premier balancier.

Selon le deuxième mode de réalisation de la figure 11, la traverse est une traverse discontinue dépourvue de portion centrale. La traverse comprend alors un espace vide séparant la première branche et la deuxième branche.

Dès lors, le raidisseur 20 s'étend dans cet espace.

En effet, le premier balancier 30 est attaché par sa première portion d'extrémité externe 31 à la première branche, en étant agencé dans la continuité de cette première branche. Par exemple, le bout de la première branche est soudé à un bout du premier balancier. Selon une autre approche, la première branche et le premier balancier forment une unique pièce.

De même, le deuxième balancier 40 est solidarisé par sa deuxième portion d'extrémité externe 41 à la deuxième branche en étant agencé dans la continuité de cette deuxième branche.

En outre, le raidisseur comporte un tube interne 70 assimilable à la portion centrale d'une traverse continue.

Par suite, la première portion d'extrémité externe 31 et la deuxième portion d'extrémité externe 41 sont creuses pour pouvoir accueillir le tube interne.

Ainsi, le tube interne pénètre dans la première portion d'extrémité externe 31 et la deuxième portion d'extrémité externe 41 pour être fixé à ces portions d'extrémité externes. Des paliers peuvent être agencés entre le tube interne et chaque portion d'extrémité externe 31, 41.

Par exemple, les moyens de fixation du tube interne à un balancier et les moyens d'articulation des balanciers à une structure sont du type décrit dans le cadre du premier mode de réalisation.

Selon l'exemple de la figure 11, le tube interne 70 peut être fixé à chaque balancier selon deux directions de fixations. Deux moyens de fixation 34, 36, 44, 46 par balancier s'étendent respectivement selon une direction de fixation externe 33, 43 et une direction de fixation interne 35, 45 pour pénétrer dans le tube interne, éventuellement au niveau de sa fibre neutre. Conformément au premier mode de réalisation, cet exemple offre des possibilités d'ajustement par le biais du réglage de la distance Dext représentant l'écartement des points de fixation extérieurs et de la distance Dint représentant l'écartement des points de fixation intérieurs.

De plus, le raidisseur peut comprendre un axe de pivotement par balancier dirigé selon une direction d'articulation 60, 60'. Chaque direction d'articulation 60, 60' s'étend longitudinalement, et est disposée transversalement entre la direction de fixation externe 33, 43 et la direction de fixation interne 35, 45 correspondantes.

Par ailleurs, la première portion d'extrémité interne 32 et la deuxième portion d'extrémité interne 42 sont longitudinalement décalées par rapport au tube interne pour être reliées à l'organe de liaison allongé 50.

Le fonctionnement de ce deuxième mode de réalisation s'apparente au fonctionnement du premier mode de réalisation décrit précédemment en assimilant le tube interne du deuxième mode de réalisation à la portion centrale du premier mode de réalisation.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Train d'atterrissage (5) d'aéronef (1) muni d'un premier patin (6) longitudinal d'appui et d'un deuxième patin (7) longitudinal d'appui ainsi que d'une traverse transversale dite traverse avant (11) et d'une traverse transversale dite traverse arrière (12) reliant chacune le premier patin (6) au deuxième patin (7), chaque traverse (11,12) ayant une première branche (16) descendante solidarisée au premier patin (6) ainsi qu'une deuxième branche (17) descendante solidarisée au deuxième patin (7), ledit train d'atterrissage (5) comportant au moins un raidisseur (20) agencé sur une traverse (10),
**caractérisé en ce que** ledit raidisseur (20) comprend successivement selon une direction transversale :
- un premier balancier (30) s'étendant d'une première portion d'extrémité externe (31) solidarisée à la traverse (10) vers une première portion d'extrémité interne (32) libre,
- un deuxième balancier (40) s'étendant d'une deuxième portion d'extrémité interne (42) libre vers une deuxième portion d'extrémité externe (41) solidarisée à ladite traverse (10),
- un premier moyen d'articulation (61) pour articuler le premier balancier (30) à une structure porteuse (2) d'un aéronef (1), et un deuxième moyen d'articulation (62) pour articuler le deuxième balancier (40) à ladite structure porteuse (2),
- un organe de liaison allongé (50) s'étendant d'une première extrémité de liaison (51) articulée à ladite première portion d'extrémité interne (32) du premier balancier (30) vers une deuxième extrémité de liaison (52) articulée à ladite deuxième portion d'extrémité interne (42) du deuxième balancier (40).

2. Train d'atterrissage selon la revendication 1,
**caractérisé en ce que** chaque balancier (30, 40) est décalé longitudinalement par rapport à la traverse (10).

3. Train d'atterrissage selon l'une quelconque des revendications 1 à 2,
**caractérisé en ce que** chaque traverse (10) est équipée d'au moins un raidisseur (20).

4. Train d'atterrissage selon l'une quelconque des revendications 1 à 3,
**caractérisé en ce qu'**au moins une traverse (10) est équipée de deux raidisseurs (20) disposés longitudinalement de part et d'autre de cette traverse (10).

5. Train d'atterrissage selon l'une quelconque des revendications 1 à 4,
**caractérisé en ce qu'**au moins une extrémité de liaison (51, 52) de l'organe de liaison allongé (50) est articulée à un balancier (30, 40) par au moins une rotule.

6. Train d'atterrissage selon l'une quelconque des revendications 1 à 5,
**caractérisé en ce qu'**au moins une extrémité de liaison (51, 52) dudit organe de liaison allongé (50) est articulée à un balancier (30, 40) par un pivot.

7. Train d'atterrissage selon l'une quelconque des revendications 1 à 6,
**caractérisé en ce qu'**au moins un balancier (30, 40) présente une raideur en roulis supérieure à la raideur en roulis de la traverse à laquelle ce balancier (30, 40) est solidarisé.

8. Train d'atterrissage selon l'une quelconque des revendications 1 à 7,
**caractérisé en ce qu'**au moins un balancier (30, 40) présente une raideur en roulis supérieure à la raideur en roulis d'un tronçon (131, 132) de la traverse à laquelle ce balancier (30, 40) est solidarisé.

9. Train d'atterrissage selon l'une quelconque des revendications 1 à 8,
**caractérisé en ce qu'**au moins un balancier (30, 40) est solidarisé à un tronçon d'une traverse (10) selon une direction de fixation externe (33, 43) et une direction de fixation interne (35, 45) qui sont décalées transversalement l'une de l'autre.

10. Train d'atterrissage selon la revendication 9,
**caractérisé en ce que** chaque direction de fixation (33, 35, 43, 45) est horizontale et passe par une fibre neutre de la traverse.

11. Train d'atterrissage selon l'une quelconque des revendications 9 à 10,
**caractérisé en ce que** chaque moyen d'articulation (61, 62) d'un balancier (30, 40) présente une direction d'articulation (60, 60') autour de laquelle le balancier (30, 40) peut effectuer une rotation, cette direction d'articulation (60, 60') étant disposée transversalement entre la direction de fixation externe (33, 43) et la direction de fixation interne (35, 45) de ce balancier (30, 40).

12. Train d'atterrissage selon l'une quelconque des revendications 1 à 11,
**caractérisé en ce qu'**au moins un balancier (30, 40) comporte une plaque décalée longitudinalement par rapport à un tronçon (131, 132) de la traverse (10) à laquelle ce balancier (30, 40) est solidarisé.

13. Train d'atterrissage selon l'une quelconque des revendications 1 à 12,
**caractérisé en ce qu'**au moins un balancier (30, 40) comporte un tube, au moins un palier (80) étant interposé entre le balancier (30, 40) et un tronçon de la traverse à laquelle ce balancier est solidarisé.

14. Train d'atterrissage selon l'une quelconque des revendications 1 à 13,
**caractérisé en ce que** l'organe de liaison allongé (50) d'un raidisseur s'étend en vol selon une direction en élévation contenue dans un plan antéropostérieur (P1) longitudinal de symétrie du train d'atterrissage.

15. Train d'atterrissage selon l'une quelconque des revendications 1 à 14,
**caractérisé en ce que** l'organe de liaison allongé (50) comprend une bielle de liaison et/ ou un amortisseur.

16. Train d'atterrissage selon la revendication 1, **caractérisé en ce que** ladite traverse étant une traverse continue comprenant une portion centrale (13) s'étendant entre la première branche et la deuxième branche, ledit raidisseur (20) s'étendant parallèlement à ladite traverse en comprenant successivement selon une direction transversale :
- ledit premier balancier (30) qui est décalé longitudinalement par rapport à la traverse,
- ledit deuxième balancier (40) qui est décalé longitudinalement par rapport à la traverse en étant dans l'alignement du premier balancier.

17. Train d'atterrissage selon la revendication 1,
**caractérisé en ce que** ladite traverse étant une traverse discontinue comprenant un espace vide entre la première branche et la deuxième branche, ledit raidisseur (20) s'étendant dans ledit espace :
- ledit premier balancier (30) est solidarisé par ladite première portion d'extrémité externe (31) à la première branche en se situant dans l'alignement de cette première branche, ladite première portion d'extrémité externe (31) étant creuse,
- ledit deuxième balancier (40) est solidarisé par ladite deuxième portion d'extrémité externe (41) à la deuxième branche en se situant dans l'alignement de cette deuxième branche, ladite deuxième portion d'extrémité externe (41) étant creuse,
- ledit raidisseur comporte un tube interne pénétrant dans la première portion d'extrémité externe (31) et la deuxième portion d'extrémité externe (41), ce tube interne étant fixé à la première portion d'extrémité externe (31) et à la deuxième portion d'extrémité externe (41), ladite première portion d'extrémité interne (32) et ladite deuxième portion d'extrémité interne (42) étant longitudinalement décalées par rapport audit tube interne pour être reliées à l'organe de liaison allongé.

18. Aéronef (1),
**caractérisé en ce que** cet aéronef (1) comporte un train d'atterrissage (5) selon l'une quelconque des revendications 1 à 17.

## Patentansprüche

1. Landegestell (5) eines Luftfahrzeugs (1) mit einer ersten longitudinalen Stützkufe (6) und einer zweiten longitudinalen Stützkufe (7), sowie mit einem vorderer Querträger (11) genannten Querträger und einem hinterer Querträger (12) genannten Querträger, die jeweils die erste Kufe (6) mit der zweiten Kufe (7) verbinden, wobei jeder Querträger (11, 12) einen sich nach unten erstreckenden ersten Arm (16), der mit der ersten Kufe (6) fest verbunden ist, sowie einen sich nach unten erstreckenden zweiten Arm (17), der mit der zweiten Kufe (7) fest verbunden ist, aufweist, wobei das Landegestell (5) mindestens eine Versteifung (20) aufweist, die auf einem Querträger (10) angeordnet ist,
**dadurch gekennzeichnet, dass** die Versteifung (20) aufeinanderfolgend in einer Querrichtung aufweist:
- ein erstes Pendel (30), das sich von einem ersten äußeren Endbereich (31), der mit dem Querträger (10) fest verbunden ist, bis zu einem ersten inneren freien Endbereich (32) erstreckt,
- ein zweites Pendel (40), das sich von einem zweiten inneren freien Endbereich (42) bis zu einem zweiten äußeren Endbereich (41) erstreckt, der mit dem Querträger (10) fest verbunden ist,
- ein erstes Gelenk (61) zum Anlenken des ersten Pendels (30) an einer Trägerstruktur (2) eines Luftfahrzeugs (1) und ein zweites Gelenk (62) zum Anlenken des zweiten Pendels (40) an der Trägerstruktur (2),
- ein längliches Verbindungsorgan (50), das sich von einem ersten Verbindungsende (51), das an dem ersten inneren Endbereich (32) des ersten Pendels (30) angelenkt ist, bis zu einem zweiten Verbindungsende (52) erstreckt, das an dem zweiten inneren Endbereich (42) des zweiten Pendels (40) angelenkt ist.

2. Landegestell nach Anspruch 1,
**dadurch gekennzeichnet, dass** jedes Pendel (30, 40) in Längsrichtung bezüglich des Querträgers (10) versetzt ist.

3. Landegestell nach einem der Ansprüche 1 bis 2,
**dadurch gekennzeichnet, dass** jeder Querträger (10) mit mindestens einer Versteifung (20) versehen ist.

4. Landegestell nach einem der Ansprüche 1 bis 3,
**dadurch gekennzeichnet, dass** mindestens ein Querträger (10) mit zwei Versteifungen (20) versehen ist, die in Längsrichtung gesehen auf der einen und der anderen Seite des Querträgers (10) angeordnet sind.

5. Landegestell nach einem der Ansprüche 1 bis 4,
**dadurch gekennzeichnet, dass** mindestens ein Verbindungsende (51, 52) des länglichen Verbindungsorgans (50) über ein Kugelgelenk an einem Pendel (30, 40) angelenkt ist.

6. Landegestell nach einem der Ansprüche 1 bis 5,
**dadurch gekennzeichnet, dass** mindestens ein Verbindungsende (51, 52) des länglichen Verbindungsorgans (50) über einen Drehzapfen an einem Pendel (30, 40) angelenkt ist.

7. Landegestell nach einem der Ansprüche 1 bis 6,
**dadurch gekennzeichnet, dass** mindestens ein Pendel (30, 40) eine Rollsteifigkeit aufweist, die größer als die Rollsteifigkeit des Querträgers ist, an dem das Pendel (30, 40) befestigt ist.

8. Landegestell nach einem der Ansprüche 1 bis 7,
**dadurch gekennzeichnet, dass** mindestens ein Pendel (30, 40) eine Rollsteifigkeit aufweist, die größer als die Rollsteifigkeit eines Teilabschnitts (131, 132) des Querträgers, an dem dieses Pendel (30, 40) befestigt ist, ist.

9. Landegestellt nach einem der Ansprüche 1 bis 8,
**dadurch gekennzeichnet, dass** mindestens ein Pendel (30, 40) an einem Teilabschnitt eines Querträgers (10) entlang einer äußeren Befestigungsrichtung (33, 43) und einer inneren Befestigungsrichtung (35, 45), die in Querrichtung gegeneinander versetzt sind, befestigt ist.

10. Landegestell nach Anspruch 9,
**dadurch gekennzeichnet, dass** jede Befestigungsrichtung (33, 35, 43, 45) horizontal ist und durch eine neutrale Faser des Querträgers verläuft.

11. Landegestell nach einem der Ansprüche 9 bis 10,
**dadurch gekennzeichnet, dass** jedes Gelenk (61, 62) eines Pendels (30, 40) eine Anlenkrichtung (60, 60') aufweist, um die herum das Pendel (30, 40) eine Drehbewegung ausführen kann, wobei die Anlenkrichtung (60, 60') quer zwischen der äußeren Befestigungsrichtung (33, 43) und der inneren Befestigungsrichtung (35, 45) dieses Pendels (30, 40) angeordnet ist.

12. Landegestell nach einem der Ansprüche 1 bis 11,
**dadurch gekennzeichnet, dass** mindestens ein Pendel (30, 40) eine bezüglich eines Teilabschnitts (131, 132) des Querträgers (10), an dem dieses Pendel (30, 40) befestigt ist, eine in Längsrichtung versetzte Platte aufweist.

13. Landegestell nach einem der Ansprüche 1 bis 12,
**dadurch gekennzeichnet, dass** mindestens ein Pendel (30, 40) ein Rohr aufweist, wobei mindestens ein Lager (80) zwischen dem Pendel (30, 40) und einem Teilabschnitt des Querträgers, an dem das Pendel befestigt ist, angeordnet ist.

14. Landegestell nach einem der Ansprüche 1 bis 13,
**dadurch gekennzeichnet, dass** das längliche Verbindungsorgan (50) einer Versteifung sich im Flug entlang einer Richtung in die Höhe erstreckt, die in einer anteroposterioren Längssymmetrieebene (P1) des Landegestells enthalten ist.

15. Landegestell nach einem der Ansprüche 1 bis 14,
**dadurch gekennzeichnet, dass** das längliche Verbindungsorgan (50) eine Verbindungsstange und/oder einen Dämpfer aufweist.

16. Landegestell nach Anspruch 1,
**dadurch gekennzeichnet, dass** der Querträger ein kontinuierlicher Querträger ist mit einem mittleren Bereich (13), der sich zwischen dem ersten Arm und dem zweiten Arm erstreckt, wobei die Versteifung (20) sich parallel zu dem Querträger erstreckt und aufeinanderfolgend in einer Querrichtung aufweist:
- das erste Pendel (30), das in Längsrichtung bezüglich des Querträgers versetzt ist,
- das zweite Pendel (40), das in Längsrichtung bezüglich des Querträgers versetzt ist und mit dem ersten Pendel ausgerichtet ist.

17. Landegestell nach Anspruch 1,
**dadurch gekennzeichnet, dass** der Querträger ein unterbrochener Querträger ist mit einem Freiraum zwischen dem ersten Arm und dem zweiten Arm, wobei sich die Versteifung (20) in diesen Raum erstreckt:
- wobei das erste Pendel (30) durch den ersten äußeren Endbereich (31) mit dem ersten Arm fest verbunden ist und mit dem ersten Arm fluchtet, wobei der erste äußere Endbereich (31) hohl ist,
- wobei das zweite Pendel (40) durch den zweiten äußeren Endbereich (41) mit dem zweiten Arm fest verbunden ist und mit diesem zweiten Arm fluchtet, wobei der zweite äußere Endbereich (41) hohl ist,
- wobei die Versteifung ein Innenrohr aufweist, das in den ersten äußeren Endbereich (31) und den zweiten äußeren Endbereich (41) eindringt, wobei das Innenrohr an dem ersten äußeren Endbereich (31) und an dem zweiten äußeren Endbereich (41) befestigt ist, wobei der erste innere Endbereich (32) und der zweite innere Endbereich (42) in Längsrichtung gegenüber dem Innenrohr versetzt sind, um mit dem länglichen Verbindungsorgan verbunden zu werden.

18. Luftfahrzeug (1),
**dadurch gekennzeichnet, dass** dieses Luftfahrzeug (1) ein Landegestell (5) nach einem der Ansprüche 1 bis 17 aufweist.

## Claims

1. A landing gear (5) for an aircraft (1), provided with a first longitudinal supporting skid (6) and a second longitudinal supporting skid (7) and also a transverse cross-member referred to as front cross-member (11) and a transverse cross-member referred to as rear cross-member (12), each connecting the first skid (6) to the second skid (7), each cross-member (11, 12) having a first downward-directed branch (16) secured to the first skid (6) and a second downward-directed branch (17) secured to the second skid (7),
said landing gear (5) comprising at least one stiffener (20) arranged on a cross-member (10), **characterised in that** said stiffener (20) comprises in succession, in a transverse direction:
- a first rocker (30) extending from a first outer end portion (31) secured to the cross-member (10) to a first free inner end portion (32),
- a second rocker (40) extending from a second free inner end portion (42) to a second outer end portion (41) secured to said cross-member (10),
- a first articulation means (61) for articulating the first rocker (30) to a loadbearing structure (2) of an aircraft (1), and a second articulation means (62) for articulating the second rocker (40) to said load-bearing structure (2),
- an elongate connection member (50) extending from a first connection end (51) articulated to said first inner end portion (32) of the first rocker (30) to a second connection end (52) articulated to said second inner end portion (42) of the second rocker (40).

2. A landing gear according to Claim 1,
**characterised in that** each rocker (30, 40) is longitudinally offset relative to the cross-member (10).

3. A landing gear according to any one of Claims 1 to 2,
**characterised in that** each cross-member (10) is equipped with at least one stiffener (20).

4. A landing gear according to any one of Claims 1 to 3,
**characterised in that** at least one cross-member (10) is equipped with two stiffeners (20) arranged longitudinally on either side of this cross-member (10).

5. A landing gear according to any one of Claims 1 to 4,
**characterised in that** at least one connection end (51, 52) of the elongate connection member (50) is articulated to a rocker (30, 40) by at least one ball joint.

6. A landing gear according to any one of Claims 1 to 5,
**characterised in that** at least one connection end (51, 52) of said elongate connection member (50) is articulated to a rocker (30, 40) by a pivot.

7. A landing gear according to any one of Claims 1 to 6,
**characterised in that** at least one rocker (30, 40) has a roll stiffness which is greater than the roll stiffness of the cross-member to which this rocker (30, 40) is secured.

8. A landing gear according to any one of Claims 1 to 7,
**characterised in that** at least one rocker (30, 40) has a roll stiffness which is greater than the roll stiffness of a section (131, 132) of the cross-member to which this rocker (30, 40) is secured.

9. A landing gear according to any one of Claims 1 to 8,
**characterised in that** at least one rocker (30, 40) is secured to a section of a cross-member (10) in an external fastening direction (33, 43) and an internal fastening direction (35, 45) which are offset transversely from one another.

10. A landing gear according to Claim 9,
**characterised in that** each fastening direction (33, 35, 43, 45) is horizontal and passes through a neutral axis of the cross-member.

11. A landing gear according to any one of Claims 9 to 10,
**characterised in that** each articulation means (61, 62) of a rocker (30, 40) has a direction of articulation (60, 60') around which the rocker (30, 40) can rotate, this direction of articulation (60, 60') being arranged transversely between the external fastening direction (33, 43) and the internal fastening direction (35, 45) of this rocker (30, 40).

12. A landing gear according to any one of Claims 1 to 11,
**characterised in that** at least one rocker (30, 40) comprises a plate longitudinally offset relative to a section (131, 132) of the cross-member (10) to which this rocker (30, 40) is secured.

13. A landing gear according to any one of Claims 1 to 12,
**characterised in that** at least one rocker (30, 40) comprises a tube, at least one bearing (80) being interposed between the rocker (30, 40) and a section of the cross-member to which this rocker is secured.

14. A landing gear according to any one of Claims 1 to 13,
**characterised in that** the elongate connection member (50) of a stiffener extends in flight in a direction in elevation contained in a longitudinal anteroposterior plane (P1) of symmetry of the landing gear.

15. A landing gear according to any one of Claims 1 to 14,
**characterised in that** the elongate connection member (50) comprises a connecting rod and/or a damper.

16. A landing gear according to Claim 1,
**characterised in that**, said cross-member being a continuous cross-member comprising a central portion (13) extending between the first branch and the second branch, said stiffener (20) extending parallel to said cross-member comprising in succession, in a transverse direction:
- said first rocker (30) which is offset longitudinally relative to the cross-member,
- said second rocker (40) which is offset longitudinally relative to the cross-member while being in line with the first rocker.

17. A landing gear according to Claim 1,
**characterised in that**, said cross-member being a discontinuous cross-member comprising an empty space between the first branch and the second branch, said stiffener (20) extending into said space:
- said first rocker (30) is secured by said first outer end portion (31) to the first branch, being located in line with this first branch, said first outer end portion (31) being hollow,
- said second rocker (40) is secured by said second outer end portion (41) to the second branch, being located in line with this second branch, said second outer end portion (41) being hollow,
- said stiffener comprises an internal tube penetrating into the first outer end portion (31) and the second outer end portion (41), this internal tube being fastened to the first outer end portion (31) and to the second outer end portion (41), said first inner end portion (32) and said second inner end portion (42) being longitudinally offset relative to said internal tube in order to be connected to the elongate connection member.

18. An aircraft (1),
**characterised in that** this aircraft (1) comprises a landing gear (5) according to any one of Claims 1 to 17.
